# EUROPEAN PATENT APPLICATION

(11) **EP 4 738 480 A1**
(43) Date of publication of application: **06.05.2026**
(21) Application number: 24832144.0
(22) Date of filing: 28.06.2024
(51) Int. Cl.: H01M 4/96, B01J 21/18, B01J 23/42, B01J 32/00, C01B 32/30, H01M 8/10

(54) **CARBON MATERIAL FOR CATALYST CARRIER OF SOLID POLYMER FUEL CELL, CATALYST LAYER FOR SOLID POLYMER FUEL CELL, AND FUEL CELL**

(30) Priority: 30.06.2023 JP 2023108953
(71) Applicant: NIPPON STEEL CHEMICAL & MATERIAL CO., LTD., Tokyo 103-0027 (JP)
(72) Inventor: IIJIMA, Takashi, Tokyo 100-8071 (JP); NEGI, Noriyuki, Tokyo 100-8071 (JP); SHIMIZU, Takayuki, Tokyo 103-0027 (JP); TADOKORO, Kenichiro, Tokyo 103-0027 (JP); MASAKI, Kazuyoshi, Tokyo 103-0027 (JP)
(74) Representative: SONN Patentanwälte GmbH & Co KG
(86) International application number: PCT/JP2024/023651
(87) International publication number: WO 2025/005288

(57) **Abstract**

A carbon material for a catalyst carrier of a solid polymer fuel cell, the carbon material including porous activated carbon black satisfying the following requirements (A) and (B).
(A) A BET specific surface area S_{BET} determined by BET analysis of a nitrogen gas adsorption isotherm is from 400 to 1200 m²/g.
(B) A ratio ΔV_{fin}/ΔVᵢₙᵢ is from 0.75 to 0.95 in a case in which a difference between an amount (mL/g) of mercury absorption at a mercury intrusion pressure of 10 MPa and an amount (mL/g) of mercury absorption at a mercury intrusion pressure of 100 MPa after pressurization of the porous activated carbon black at a pressure of 100 MPa with a mold in a mercury porosimetry method and such a difference before pressurization of the porous activated carbon black at a pressure of 100 MPa with the mold are respectively defined as ΔV_{fin} and ΔVᵢₙᵢ.

## Description

### Technical Field

The present disclosure relates to a carbon material for a catalyst carrier of a solid polymer fuel cell, a catalyst layer for a solid polymer fuel cell, and a fuel cell.

### Background Art

A solid polymer fuel cell which is one of fuel batteries includes paired catalyst layers placed on both surfaces of a solid polymer electrolyte membrane, a gas diffusion layer placed outside each of the catalyst layers, and a separator placed outside such each gas diffusion layer. One catalyst layer of the paired catalyst layers serves as an anode of the solid polymer fuel cell and the other catalyst layer serves as a cathode of the solid polymer fuel cell. In a usual solid polymer fuel cell, plural unit cells each having the above constituent components are stacked in order to obtain the desired output.

A fuel gas such as hydrogen is introduced into the separator on the anode side. The gas diffusion layer on the anode side allows fuel to be diffused and then introduced into the anode. The anode includes a catalyst component, a catalyst carrier carrying a catalyst for a fuel cell, and an electrolyte material having proton conductivity. Hereinafter, a catalyst component promoting an electricity generation reaction (oxidation reaction or reduction reaction described later) in a fuel cell is also referred to as "catalyst for a fuel cell". The catalyst carrier is often constituted from a porous carbon material. The oxidation reaction of the fuel gas occurs to generate protons and electrons on the catalyst for a fuel cell. For example, in a case in which the fuel gas is a hydrogen gas, the following oxidation reaction occurs.

H₂ → 2H⁺ + 2e⁻ (E₀ = 0 V)

The protons generated in the oxidation reaction are introduced into the cathode through the electrolyte material (ionomer) in the anode and the solid polymer electrolyte membrane. The electrons are introduced into an external circuit through the catalyst carrier, the gas diffusion layer, and the separator. The electrons are worked in the external circuit, and then introduced into the separator on the cathode side. The electrons are then introduced into the cathode through the separator on the cathode side and the gas diffusion layer on the cathode side.

The solid polymer electrolyte membrane is constituted from an electrolyte material having proton conductivity. The solid polymer electrolyte membrane introduces the protons generated in the oxidation reaction, into the cathode.

An oxidizing gas such as an oxygen gas or air is introduced into the separator on the cathode side. The gas diffusion layer on the cathode side allows the oxidizing gas to be diffused and then introduced into the cathode. The cathode includes a catalyst for a fuel cell, a catalyst carrier carrying the catalyst for a fuel cell, and an electrolyte material having proton conductivity. The catalyst carrier is often constituted from a porous carbon material. The reduction reaction of the oxidizing gas occurs to generate water on the catalyst for a fuel cell. For example, in a case in which the oxidizing gas is an oxygen gas or air, the following reduction reaction occurs.

O₂ + 4H⁺ + 4e⁻ → 2H₂O (E₀ = 1.23 V)

The water generated in the reduction reaction is discharged together with the unreacted oxidizing gas, outside the fuel cell. Thus, the solid polymer fuel cell generates electricity by use of the difference in free energy (difference in potential) generated along with the oxidation reaction of the fuel gas. In other words, the free energy generated in the oxidation reaction is converted to the work to be performed in the external circuit with the electrons.

Meanwhile, porous carbon materials (hereinafter, also referred to as "carbon carriers") applicable to catalyst carriers of solid polymer fuel batteries have been studied and variously proposed.

For example, Patent Literature 1 proposes "A membrane electrode assembly including a polymer electrolyte membrane, and paired electrode catalyst layers sandwiching the polymer electrolyte membrane, in which at least one of the paired electrode catalyst layers include a catalyst-carrying particle, a polymer electrolyte, and a fibrous substance having an average fiber diameter of from 10 nm to 300 nm, the mass of the fibrous substance is from 0.02 times to 1.0 time the mass of a carrier in the catalyst-carrying particle, and the mass of the polymer electrolyte is from 0.4 times to 1.0 time the mass of a carrier in the catalyst-carrying particle.".

Patent Literature 2 proposes "A carbon material for a catalyst carrier of a solid polymer fuel cell, in which the carbon material is a porous carbon material having a three-dimensional dendritic structure three-dimensionally branched, the branch diameter is 81 nm or less, and the following (A) and (B) are simultaneously satisfied.".
(A) The BET specific surface area S_{BET} determined by BET analysis of a nitrogen gas adsorption isotherm is from 400 to 1500 m²/g.
(B) A relationship between the mercury pressure P_{Hg} (kPa) and the amount of mercury absorption V_{Hg} is measured by a mercury porosimetry method and the increase ΔV_{Hg:4.3-4.8} in amount of mercury absorption V_{Hg}, as measured in an increase in the common logarithm LogP_{Hg} of the mercury pressure P_{Hg}, from 4.3 to 4.8, is from 0.82 to 1.50 cc/g.

Patent Literature 3 proposes "A method of producing catalyst ink to be applied to both surfaces of an electrolyte membrane of a fuel cell, the method including the steps of (1) pulverizing a catalyst-carrying particle having activation-treated carbon black and a catalyst carried on the carbon black, with a jet mill, (2) stirring a suspension solution in which the catalyst-carrying particle pulverized, an electrolyte, and a solvent suspending the catalyst-carrying particle and the electrolyte are mixed, and (3) dispersing the suspension solution with an ultrasonic homogenizer, in which dispersion treatment in the step (3) is made so that a frequency distribution of the particle size of the catalyst-carrying particle in the catalyst ink, as measured by a laser diffraction particle size distribution measurement method, has a first peak in a particle size region of 1 micrometer or less and does not have any peak having a height of one-quarter the height of the first peak in a particle size region of less than 1 micrometer.".

Patent Literature 4 proposes "A carbon material for a catalyst carrier, in which the carbon material is used in a catalyst carrier of a solid polymer fuel cell and has a three-dimensional dendritic structure three-dimensionally branched, and the following (1) and (2) are simultaneously satisfied".
(1) The DL/DH is 1.5 or more in a case in which the cumulative distribution [%] of a particle having a size of 1 µm or less is defined as DL and the cumulative distribution [%] of a particle having a size of more than 1 µm is defined as DH on the volume size basis in particle size distribution measurement with a laser diffraction/scattering type particle size distribution meter.
(2) The mode diameter in a pore diameter range of from 20 nm to 200 nm, as measured by a mercury porosimetry method, is from 40 nm to 70 nm.

Patent Literature 1: Japanese Patent Application Laid-Open (JP-A) No. 2023-022654
Patent Literature 2: WO2018/182047
Patent Literature 3: Japanese Patent Publication (JP-B) No. 5790537
Patent Literature 4: JP-A No. 2022-156985

### SUMMARY OF INVENTION

### Technical Problem

Both electricity generation characteristics and durability to be satisfied in a solid polymer fuel cell (hereinafter, also referred to as "PEFC") are important characteristics for spreading a fuel cell vehicle (hereinafter, also referred to as "FCV"), and correspond to an essential object to be achieved for a commercial vehicle whose market is expected to be grown in future.

In general, the electricity generation characteristics of PEFC mainly depend on two factors: the attributable fraction (hereinafter, also referred to as "rate of catalyst utilization") to the reaction of a metal catalyst (platinum nanoparticle or the like); and the diffusivity of an oxidizing gas. A pore structure of a carbon carrier (porous carbon material) correlates to the rate of catalyst utilization and a steric structure (for example, dendritic structure) of the carbon carrier correlates to gas diffusivity.

It is desirable for the pore structure that only a pore having a necessary and sufficient size for allowing a several-nm metal catalyst (platinum nanoparticle or the like) to be present in the pore is selectively present, and mesoporous carbon is generally considered to be suited for a carrier.

Although a pore suited for gas diffusion is not clear, the pore size of a void in a catalyst layer for nucleic acid, to be estimated from various carbon carriers currently applied, is from about several tens to 100 nm. Such a void in a catalyst layer is realized in a steric structure (dendritic structure or the like) of a carbon carrier.

It is desirable for the pore structure that only a pore having a necessary and sufficient size for allowing a several-nm catalytic metal to be present in the pore is selectively present, and a mesoporous carbon material is generally considered to be suited for a carbon carrier.

However, carbon carriers (porous carbon materials) of conventional techniques, including those in Patent Literature 1 to Patent Literature 5, still have room for improvement in suppression of decreases in electricity generation characteristics (in particular, high-load characteristics).

Specifically, the reason for decreases in electricity generation characteristics (in particular, high-load characteristics) is that a steric structure of a carbon carrier may be broken in a case in which a mechanical load due to pulverization or the like is applied, for example, during production of ink for catalyst layer formation, and such a carbon carrier has room for improvement.

The improvement is demanded to be realized with inexpensive and useful carbon black among carbon carriers (porous carbon materials).

An object of the disclosure is then to provide a carbon material for a catalyst carrier of a solid polymer fuel cell, in which electricity generation characteristics (in particular, high-load characteristics) decrease, as well as a catalyst layer for a solid polymer fuel cell, and a fuel cell, in which the carbon material is utilized.

### Solution to Problem

Solutions for solving the problems include the following aspects.
<1> A carbon material for a catalyst carrier of a solid polymer fuel cell, the carbon material including porous activated carbon black satisfying the following requirements (A) and (B):
   (A) a BET specific surface area S_{BET} determined by BET analysis of a nitrogen gas adsorption isotherm is from 400 to 1200 m²/g, and
   (B) a ratio ΔV_{fin}/ΔVᵢₙᵢ is from 0.75 to 0.95 in a case in which a difference between an amount (mL/g) of mercury absorption at a mercury intrusion pressure of 10 MPa and an amount (mL/g) of mercury absorption at a mercury intrusion pressure of 100 MPa after pressurization of the porous activated carbon black at a pressure of 100 MPa with a mold in a mercury porosimetry method and such a difference before pressurization of the porous activated carbon black at a pressure of 100 MPa with the mold are respectively defined as ΔV_{fin} and ΔVᵢₙᵢ.
<2> The carbon material for a catalyst carrier of a solid polymer fuel cell according to <1>, wherein at least one of the following requirements (C) or (D) is further satisfied:
   (C) the ΔVᵢₙᵢ is from 0.80 mL to 1.50 mL/g, and
   (D) an intensity ratio I_{D}/I_{G} is from 1.40 to 2.20 in a case in which an intensity in a D band of from 1300 to 1360 cm⁻¹ is designated as I_{D} and an intensity in a G band of from 1560 to 1620 cm⁻¹ is designated as I_{G} in a Raman spectrum obtained by Raman spectrometry.
<3> A catalyst layer for a solid polymer fuel cell, the catalyst layer including the carbon material for a catalyst carrier of a solid polymer fuel cell according to <1> or <2>.
<4> A fuel cell including the catalyst layer for a solid polymer fuel cell according to <3>.
<5> The fuel cell according to <4>, wherein the catalyst layer for a solid polymer fuel cell is a catalyst layer on a cathode side.

### Advantageous Effects of Invention

According to the disclosure, a carbon material for a catalyst carrier of a solid polymer fuel cell, in which electricity generation characteristics (in particular, high-load characteristics) decrease, as well as a catalyst layer for a solid polymer fuel cell, and a fuel cell, in which the carbon material is utilized, a carbon material for a catalyst carrier of a solid polymer fuel cell, as well as a catalyst layer for a solid polymer fuel cell, and a fuel cell, in which the carbon material is utilized are provided.

### BRIEF DESCRIPTION OF DRAWING

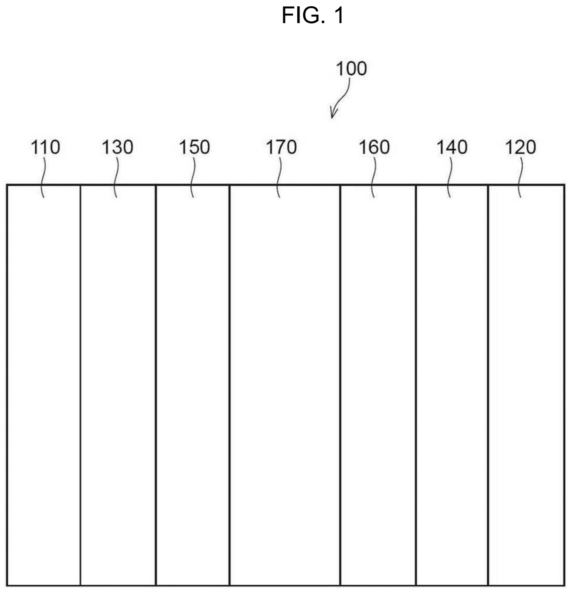

[FIG. 1] FIG. 1 is a schematic view illustrating one example of an outline configuration of the fuel cell of the disclosure.

### DESCRIPTION OF EMBODIMENTS

One example of the disclosure is described.

A numerical value range represented by "(from) ... to ..." in the disclosure means that the range encompasses respective numerical values described before and after "to" as a lower limit and an upper limit. A numerical value range in the case of "more than" or "less than" attached to a numerical value described before or after "to" means that such a numerical value is not included as a lower limit value or an upper limit value.

The term "step" in the disclosure encompasses not only an independent step, but also a step that can achieve a predetermined object even in the case of being not clearly distinguished from other steps.

In the disclosure, the "electrolyte material having proton conductivity" used in the catalyst layer of the fuel cell is also referred to as "ionomer".

### <Carbon Material for Catalyst Carrier of Solid Polymer Fuel Cell>

The carbon material for a catalyst carrier of a solid polymer fuel cell of the disclosure includes porous activated carbon black satisfying requirements (A) and (B) described later.

The porous activated carbon black here means carbon black made porous by activation. The porous activated carbon black is also referred to as "porous carbon black".

The carbon material for a catalyst carrier of the disclosure is a carbon material in which electricity generation characteristics (in particular, high-load characteristics) decrease. The carbon material of the disclosure has been found based on the following findings.

In general, electricity generation characteristics of a fuel cell largely depend on overvoltage of a cathode reaction. The following three factors are considered to be main factors for overvoltage in a cathode electrode.
(1) Combining of two types of resistance, electron conduction resistance and proton conduction resistance, depending on the magnitude of ohmic resistance of a catalyst layer
(2) Diffusion resistance of an oxidizing gas in a catalyst layer
(3) Electrochemical resistance, namely, resistance in a chemical reaction along with electron transfer on a catalytic metal surface (namely, resistance in a catalyst reaction)

The inventors have made studies about an increase in mechanical strength of a steric structure (namely, dendritic structure) derived from an aggregate structure in the porous carbon black in order to improve "(2) Diffusion resistance of an oxidizing gas in a catalyst layer", among the above main factors. As a result, the following findings have been obtained.

A mechanical load is applied to the porous carbon black because stirring or the like is performed in a step of producing ink for catalyst layer formation, or the like, in order to improve dispersion of the porous carbon black. It is suitable that this mechanical load does not cause breakage of a steric structure (dendritic structure) and releases only aggregation to provide disintegration to a minimum unit aggregate. Such disintegration results in formation of a void (namely, pore) derived from a uniform steric structure (dendritic structure) in a catalyst layer. As a result, the diffusion resistance of an oxidizing gas is smaller, and electricity generation characteristics (in particular, high-load characteristics) are improved.

In this regard, in a case in which the mechanical load causes breakage of a steric structure (dendritic structure), a fine powder is generated in ink and a void derived from the steric structure (dendritic structure) in a catalyst layer is clogged by the fine powder. In other words, a pore is hardly formed in a catalyst layer. Therefore, the diffusion resistance of an oxidizing gas is larger, and electricity generation characteristics (in particular, high-load characteristics) are lowered.

In other words, mechanical strength of the porous carbon black contributes to improvements in electricity generation characteristics (in particular, high-load characteristics).

A mercury porosimetry method has been conventionally used for qualifying development of a steric structure (dendritic structure) of the porous carbon black and qualifying a void in a catalyst layer.

The pressure (MPa) of mercury absorption in a mercury porosimetry method varies depending on the variation in steric structure (dendritic structure) of the porous carbon black (for example, the branch size of the dendritic structure (corresponding to the primary particle size of carbon black) and the size of the dendritic structure (corresponding to the aggregate diameter). In other words, the size of a void formed from the steric structure (dendritic structure) is reflected in the amount (mL/g) of mercury absorption.

Therefore, a mercury porosimetry method is suited for quantification of the steric structure (dendritic structure) of the porous carbon black.

In view of the branch size minimally necessary for an increase in mechanical strength of the steric structure (dendritic structure) of the porous carbon black, absorption of mercury starts at an intrusion pressure of 10 MPa or more. In this regard, given that the substantial upper limit of the primary particle size of carbon black, corresponding to the branch size, is 80 nm, the upper limit of the mercury intrusion pressure is 100 MPa.

Therefore, the difference ΔV in amount (mL/g) of mercury absorption between intrusion pressures of 10 MPa and 100 MPa by use of a mercury porosimetry method is suited as a quantitative index of the steric structure (dendritic structure) of the porous carbon black.

The inventors then carried out the following experiment.

The ΔV in the porous carbon black before and after an ink production step with a planetary ball mill has been measured in order to simulate a mechanical load acting on the porous carbon black during formation of ink for catalyst layer formation. In this regard, the porous carbon black has been mechanically broken by pressing with a mold, and the ΔV before and after such pressing has been measured.

The correlation between both has been examined to quantify mechanical strength of the steric structure (dendritic structure) of the porous carbon black, in which decreases in electricity generation characteristics (in particular, high-load characteristics) are small in any ink step, with the ratio of ΔV before and after pressing with a mold.

As a result of such an examination, it has been indicated that the ratio ΔV_{fin}/ΔVᵢₙᵢ where the amount of mercury absorption before pressing with a mold is designated as VΔᵢₙᵢ and the amount of mercury absorption after pressing with a mold is designated as ΔV_{fin} is optimal as a mechanical strength index in a step of producing ink of the porous carbon black.

In this regard, the inventors have studied a method of producing porous carbon black large in BET specific surface area and high in mechanical strength of a steric structure (dendritic structure). As a result, the following findings have been obtained.

Raw material carbon black is made porous by activation, heat-treated, and thus increased in crystallinity, whereby porous carbon black suited for a catalyst carrier and increased in electricity generation characteristics (in particular, high-load characteristics) and durability is obtained.

Such an improvement in mechanical strength of the porous carbon black requires the following guidelines.
(1) Activation for suppression of the decrease in mechanical strength
(2) Increase in heat treatment temperature
(3) Use of large-diameter raw material carbon black

"(1) Activation for suppression of decrease in mechanical strength" is important among the above guidelines.

In a case in which not raw material carbon black is directly activated, but a raw material carbon black surface is selectively oxidatively consumed before activation, oxidation of the raw material carbon black surface can be suppressed in the subsequent activation. Thus, not only oxidation of the raw material carbon black surface is suppressed during activation, but also a pore developed inside of raw material carbon black can be formed. Porous carbon black obtained by developing a pore inside with surface oxidation suppressed is enhanced in mechanical strength, regardless of a high BET specific surface area.

The treatment (pretreatment of activation) suited for selective oxidation of the raw material carbon black surface is low-temperature treatment at from room temperature (25°C) to 70°C with ozone, or oxidation treatment at from 300°C to 500°C with air.

A required pore volume for exhibition of excellent electricity generation characteristics (in particular, high-load characteristics) is ensured by "(2) Increase in heat treatment temperature". However, in a case in which the heat treatment temperature is higher, a pore collapses. Therefore, "(3) Use of large-diameter raw material carbon black" to be easily activated and also optimization of activation conditions are required so that an objective BET specific surface area of the porous carbon black can be ensured.

It has been found from the above findings that the carbon material for a catalyst carrier of the disclosure is a carbon material in which electricity generation characteristics (in particular, high-load characteristics) decrease.

Hereinafter, requirements (A) and (B) are described.

The carbon material for a catalyst carrier of the disclosure preferably satisfies not only requirements (A) and (B), but also at least one of requirement (C) or requirement (D) from the viewpoint of suppression of decreases in electricity generation characteristics (in particular, high-load characteristics).

### (Requirement (A))

(A) The BET specific surface area S_{BET} determined by BET analysis of a nitrogen gas adsorption isotherm is from 400 to 1200 m²/g.

The BET specific surface area S_{BET} of the porous carbon black is the most optimal property for quantitatively representing the degree of pore development in a catalyst carrier.

In a case in which the BET specific surface area S_{BET} of the porous carbon black is 400 m²/g or less, the amount of carbon required for carrying a catalytic metal increases, the thickness of the catalyst layer increases, and gas diffusion resistance increases. As a result, decreases in electricity generation characteristics (in particular, high-load characteristics) are caused.

In this regard, in a case in which the BET specific surface area S_{BET} of the porous carbon black is more than 1200 m²/g, the requirement (B) described later cannot be satisfied. In other words, mechanical strength of the steric structure (dendritic structure) of the porous carbon black is low, whereby the steric structure (dendritic structure) is broken during production of ink for catalyst layer formation, to cause a fine content to be present in the ink in a mixed manner. As a result, such a fine powder clogs a void in a catalyst layer. Thus, gas diffusion resistance increases and electricity generation characteristics (in particular, high-load characteristics) decrease.

The lower limit value of the BET specific surface area of the porous carbon black is preferably 450 m²/g or more, more preferably 500 m²/g or more.

The upper limit value of the BET specific surface area of the porous carbon black is preferably 1150 m²/g or less, more preferably 1100 m²/g or less.

The BET specific surface area is a value measured by a method described in Examples below.

### (Requirement (B))

(B) The ratio ΔV_{fin}/ΔVᵢₙᵢ is from 0.75 to 0.95 in a case in which the difference between the amount (mL/g) of mercury absorption at a mercury intrusion pressure of 10 MPa and the amount (mL/g) of mercury absorption at a mercury intrusion pressure of 100 MPa after pressurization of the porous activated carbon black at a pressure of 100 MPa with a mold in a mercury porosimetry method and such a difference before pressurization of the porous activated carbon black at a pressure of 100 MPa with the mold are respectively defined as ΔV_{fin} and ΔVᵢₙᵢ..

The difference between the amount (mL/g) of mercury absorption at a mercury intrusion pressure of 10 MPa and the amount (mL/g) of mercury absorption at a mercury intrusion pressure of 100 MPa is "Amount of mercury absorption at a mercury intrusion pressure of 100 MPa" - "Amount of mercury absorption at a mercury intrusion pressure of 10 MPa".

The ratio ΔV_{fin}/ΔVᵢₙᵢ of the porous carbon black is an index utilizing a breakage behavior with mold pressing, and is an index of the difficulty of breakage of the porous carbon black, for example, in production of ink for catalyst layer formation.

In a case in which the ratio ΔV_{fin}/ΔVᵢₙᵢ of the porous carbon black is less than 0.75, mechanical strength of the steric structure (dendritic structure) of the porous carbon black is low. Therefore, the porous carbon black is broken during ink production to cause a fine content to be present in the ink in a mixed manner. As a result, such a fine powder clogs a void in a catalyst layer. Thus, gas diffusion resistance increases and electricity generation characteristics (in particular, high-load characteristics) decrease.

In this regard, the upper limit value (0.95) of the ratio ΔV_{fin}/ΔVᵢₙᵢ of the porous carbon black is the upper limit value in a substantial sense that a material showing a large value of ratio ΔV_{fin}/ΔVᵢₙᵢ of 0.95 or more is not present.

The lower limit value of the ratio ΔV_{fin}/ΔVᵢₙᵢ of the porous carbon black is preferably 0.76 or more, more preferably 0.77 or more.

The upper limit value of the ratio ΔV_{fin}/ΔVᵢₙᵢ of the porous carbon black is preferably 0.94 or less, more preferably 0.93 or less.

The ratios ΔV_{fin} and ΔVᵢₙᵢ of the porous carbon black are each a value measured by a method described in Examples below.

### (Requirement (C))

(C) The difference ΔVᵢₙᵢ between the amount (mL/g) of mercury absorption at a mercury intrusion pressure of 10 MPa and the amount (mL/g) of mercury absorption at a mercury intrusion pressure of 100 MPa before pressurization of the porous carbon black at a pressure of 100 MPa with the mold is from 0.80 mL to 1.50 mL/g.

The ΔVᵢₙᵢ of the porous carbon black is an index quantitatively indicating the degree of development of the steric structure (dendritic structure) of the porous carbon black, and is an index strongly correlating to the volume of a void in a catalyst layer.

In a case in which the ΔVᵢₙᵢ of the porous carbon black is less than 0.80 mL/g, the pore volume of a void formed in a catalyst layer is small, and gas diffusion resistance increases and electricity generation performance (in particular, high-load characteristics) decreases.

In a case in which the ΔVᵢₙᵢ of the porous carbon black is more than 1.50 mL/g, such a value corresponds to large roughness of the porous carbon black surface, and therefore the requirement (B) is not satisfied. The mechanical strength of the steric structure (dendritic structure) of the porous carbon black is low, and the porous carbon black is broken during ink production to cause a fine content to be present in the ink in a mixed manner. As a result, such a fine powder clogs a void in a catalyst layer. Thus, gas diffusion resistance increases and electricity generation characteristics (in particular, high-load characteristics) decrease.

The lower limit value of the ΔVᵢₙᵢ of the porous carbon black is preferably 0.82 mL/g or more, more preferably 0.84 mL/g or more.

The upper limit value of the ΔVᵢₙᵢ of the porous carbon black is preferably 1.45 mL/g or less, more preferably 1.40 mL/g or less.

The ΔVᵢₙᵢ of the porous carbon black is a value measured by a method described in Examples below.

### (Requirement (D))

(D) The intensity ratio I_{D}/I_{G} is from 1.40 to 2.20 in a case in which the intensity in a D band of from 1300 to 1360 cm⁻¹ is designated as I_{D} and the intensity in a G band of from 1560 to 1620 cm⁻¹ is designated as I_{G} in a Raman spectrum obtained by Raman spectrometry.

The intensity ratio I_{D}/I_{G} of the porous carbon black is an index indicating crystallinity of the porous carbon black.

In a case in which the intensity ratio I_{D}/I_{G} of the porous carbon black is less than 1.4, crystallinity of the porous carbon black is so high that a required pore surface area for electricity generation is difficult to keep. Thus, the amount of carbon necessary for carrying the catalytic metal increases, and the thickness of the catalyst layer increases. As a result, gas diffusion resistance increases, thereby leading to decreases in electricity generation characteristics (in particular, high-load characteristics).

In a case in which the intensity ratio I_{D}/I_{G} of the porous carbon black is more than 2.2, crystallinity of the porous carbon black is so low that minimum durability is not exhibited.

The lower limit value of the intensity ratio I_{D}/I_{G} of the porous carbon black is preferably 1.45 or more, more preferably 1.50 or more.

The upper limit value of the intensity ratio I_{D}/I_{G} of the porous carbon black is preferably 2.15 or less, more preferably 2.10 or less.

The intensity ratio I_{D}/I_{G} is a value measured by a method described in Examples below.

### <Method of Producing Carbon Material for Catalyst Carrier of Solid Polymer Fuel Cell>

Hereinafter, one example of the method of producing the carbon material for a catalyst carrier of a solid polymer fuel cell of the disclosure (hereinafter, also referred to as "method of producing the carbon material") is described.

The method of producing the carbon material of the disclosure includes, for example, the following three steps.

The method of producing the carbon material of the disclosure provides a carbon material satisfying the requirement (A) and the requirement (B), preferably a carbon material (namely, porous activated carbon black) not only the requirement (A) and the requirement (B), but also at least one of the requirement (C) or the requirement (D).

Oxidation treatment step: oxidation treatment step of selectively oxidizing a raw material carbon black surface with ozone or oxygen

Activation treatment step: activation treatment step of making the raw material carbon black oxidized in the oxidation treatment step (hereinafter, oxidized raw material carbon) porous by activation.

Heat treatment step: heat treatment step of heat-treating the oxidized raw material carbon black made porous in the activation treatment step (hereinafter, porous raw material carbon)
Ozone treatment step: ozone treatment step of oxidation-treating the porous raw material carbon black heat-treated in the heat treatment step (hereinafter, heat-treated porous raw material carbon black), with ozone.

Hereinafter, the detail of each step is described.

First, the raw material carbon black to be used is described.

### (Raw Material Carbon Black)

The raw material carbon black applied here can be suitably carbon black satisfying predetermined three configurations: primary particle size, steric structure (aggregate structure formed by beading primary particles), and granulated state, described later.

### -Primary Particle Size-

The size of a void in a catalyst layer to be formed is determined from the steric structure and the primary particle size of the raw material carbon black. In other words, the steric structure is made from primary particles beaded, and therefore, primary particle size × number of beads = void size, is satisfied.

In a case in which the steric structure is developed and the primary particle size is 20 nm or more, electricity generation characteristics do not decrease due to rate-limiting gas diffusion in the catalyst layer. In other words, a preferred range of the primary particle size is from 20 nm to 80 nm. A primary particle size of more than 80 nm is too large to make the development of the steric structure difficult, and thus a primary particle size of 80 nm is a substantial limit in terms of production.

Pore formation by activation is presumed to allow a pore to be formed from the outside toward the inside, and the vicinity of the surface is continuously exposed to oxidation treatment and the loss due to consumption is large. In a case in which this presumption is made, a larger primary particle size tends to allow a pore smaller in pore size to be formed in the inside and allow a pore relatively large in pore size to be formed in the vicinity of the surface.

In fact, the activation treatment of the raw material carbon black which is large in primary particle size provides weak pore development as compared with the case of a smaller particle size even in a case in which mass reduction progresses. In other words, as the primary particle size is larger, the BET surface area is more hardly larger.

In this regard, although the mechanism is not necessarily clear, in the case of the same crystallinity based on Raman or X diffraction, the raw material carbon black which is larger in primary particle size is higher in resistance to oxidative consumption than the raw material carbon black which is smaller in primary particle size. In other words, durability serves as an outline as the primary particle size is larger.

In particular, the raw material carbon black, which has a primary particle size of more than 40 nm, produces an effect on improvement of durability. The raw material carbon black, which has a primary particle size of 50 nm or more, produces an effect on a significant improvement in durability, and the raw material carbon black, which has a primary particle size of more than 60 nm, produces a remarkable effect of an improvement in durability.

The primary particle size of the raw material carbon black is one of basic physical properties, and is seen in a primary particle size as a catalog value from a carbon black manufacturer.

Herein, in a case in which a catalog value from a carbon black manufacturer cannot be seen, the arithmetic average value of the primary particle size is calculated through a primary particle image measured with an electron microscope corresponding to a method recommended by CARBON BLACK ASSOCIATION, namely, a method described in the Carbon Black Yearbook. More specifically, "i. Electron microscopic photography", "ii. Measurement of particle size", and "iii. Method of calculating particle size" on page 176 of the Carbon Black Handbook (edited by CARBON BLACK ASSOCIATION, first published in 1971 (S46)) have been seen. In order to obtain the statistical average, the sizes of at least 100 primary particles are measured, and the arithmetic average is identified as the primary particle size. The arithmetic average size is here calculated by the following formula.
d = Σnᵢdi/Σnᵢ, wherein nᵢ is the number of particle sizes di.

### -Steric Structure-

A structure suited for a catalyst carrier of a fuel cell is preferably porous carbon black in which a steric structure (dendritic structure) is developed. A catalyst layer formed with the steric structure is a void-containing catalyst layer high in porosity and the diffusion speed of an oxidizing gas increases.

An applicable physical property value reflecting the steric structure is, for example, the amount of DBP oil absorption, the BET specific surface area, or a distribution of the amount of mercury indentation by a mercury porosimetry method.

The amount of DBP oil absorption is a representative industrial index in colloidal physical properties of carbon black, and is a so-called catalog placing value, and any value placed in a physical property table from a carbon black manufacturer is also used for definitions of physical properties in the disclosure.

A specific numerical value of the amount of DBP oil absorption is preferably 80 mL/100 g or more, more preferably 100 mL/100 g, still more preferably 120 mL/100 g.

In a case in which the specific gravity of the raw material carbon black is approximately 1.8 g/mL and thus the amount of DBP oil absorption is considered to correspond to a void in the catalyst layer, an amount of DBP oil absorption of 80 mL/100 g corresponds to a void of 1.4 times or more the volume of the raw material carbon black. In a case in which the amount of DBP oil absorption is smaller than 80 mL/100 g, development of the steric structure is so small that high-load characteristics decrease. In this regard, the upper limit of the amount of DBP oil absorption is an upper limit of 180 mL/100 g in terms of production principle.

The amount of DBP oil absorption indicates the amount of dibutyl phthalate (DBP) absorbed by 100 g of carbon black, and is a value defined in ASTM (American Standard Test Method) D2414-6TT.

The BET specific surface area is the most basis physical property value of the porous carbon black. The BET specific surface area of the raw material carbon black has an influence on the activation in the first activation treatment step.

A specific BET specific surface area is preferably 20 to 200 m²/g, more preferably 25 to 180 m²/g.

The BET specific surface area is a value measured by a method described in Examples below.

Evaluation of the steric structure by a mercury porosimetry method is performed by converting the hydrostatic pressure applied to mercury, to the pore diameter, on the assumption of a cylinder with the surface tension of mercury to the raw material carbon black, and obtaining a distribution in which the horizontal axis represents the pore size and the vertical axis represents the value of integral of the volume of a pore larger in size than the pore size.

The raw material carbon black, which has the steric structure, provides absorption of mercury proportional to the void volume, at a relative pressure of indentation, corresponding to the void size resulting from the steric structure, and thus the steric structure can be quantitatively evaluated from the pore size distribution of the amount of mercury absorption.

Specifically, the increment in amount of mercury absorbed in a pressure rise in which the mercury indentation pressure increases from 10 MPa (corresponding to a pore of about 10 nm) to 100 MPa (corresponding to a pore of about 100 nm) is preferably from 0.5 to 1.5 mL/g in consideration of a suited amount of DBP oil absorption for the void in the catalyst layer. In a case in which the increment in amount of mercury is smaller than 0.5 mL/g, development of the steric structure is so small that high-load characteristics decrease. In this regard, an increment in amount of mercury of 1.5 mL/g is the upper limit in terms of production principle.

### (Oxidation Treatment Step)

The oxidation treatment step is a step of selectively oxidizing a raw material carbon black surface with ozone or oxygen. In other words, the oxidation treatment step may be any of an ozone treatment step of selectively oxidizing the raw material carbon black surface with ozone, or an ozone treatment step of selectively oxidizing the raw material carbon black surface with oxygen.

### -Ozone Treatment Step-

Ozone (O₃) has oxidation power next to fluorine, and thus can be applied to oxidation treatment of the raw material carbon black. The raw material carbon black can increase the degree of blackness depending on the amount of an oxygen-containing functional group, and thus is industrially utilized for production of carbon black for color.

The raw material carbon black surface can be selectively oxidized by use of strong oxidation power of ozone. In other words, the raw material carbon black surface can be subjected to selective oxidation before the raw material carbon black is made porous by activation, whereby pore development by activation is remarkably promoted, although the mechanism is not necessarily clear. Thus, both an enhancement in branch intensity in the steric structure (dendritic structure) and pore development of the resulting porous carbon black are achieved.

It is presumed that selective oxidation of the raw material carbon black surface combusts and burns down a thin film of about several nanometers on the surface to allow a pore introducing an activation gas for activation into the inside to be formed on the raw material carbon black. Alternatively, it is presumed that a state is provided in which activation allows a pore introducing an activation gas for activation into the inside to be easily formed into oxidized raw material carbon black.

Thus, the ozone treatment plays a role in developing a pore formed on porous raw material carbon black after activation. In other words, the ozone treatment plays a role in increasing the pore volume and also increasing the surface area of such a pore, and simultaneously forming only a pore preferred in a catalyst carrier. The ozone treatment additionally plays a role in not causing roughening of the surface and branch narrowing in the steric structure (dendritic structure) of porous carbon black, which are not appropriate for electricity generation characteristics (in particular, high-load characteristics), in subsequent steps. Such roughening and branch narrowing in the steric structure (dendritic structure) due to combustion of the porous carbon black surface lead to a decrease in mechanical strength of the steric structure (dendritic structure).

Therefore, the ozone treatment is performed, whereby porous carbon black satisfying the requirement (A) and the requirement (B) (preferably not only the requirement (A) and the requirement (B), but also the requirement (C)) is obtained.

The ozone treatment may be made with an apparatus in which the amount of ozone generated is 10 mg/hour or more, and the mechanism of ozone generation and the structure of the apparatus are not restricted. In order to increase the rate of ozone production, pure oxygen is usually used as an input gas. In other words, the reason is that the input of air leads to a low content of oxygen serving as an ozone raw material, and correspondingly decreases the amount of ozone production. Since ozone is unstable and is self-decomposed over time, a gas containing ozone in the state of being constantly allowed to flow is preferably contacted with the raw material carbon black. Such an ozone gas in the state of being heated may also be contacted with the raw material carbon black in order to increase the reaction speed.

The ozone treatment temperature is set to from room temperature (25°C) to 70°C. Since an increased ozone treatment temperature also leads to an increased speed of self-decomposition of ozone, a substantial upper limit for oxidizing the raw material carbon black is 70°C.

The ozone treatment time may be a condition of from 1 to 9 hours so that the time until the percentage of oxidative consumption of the raw material carbon black reaches 3.0% is in the order of several hours.

An ozone treatment time of less than 1 hour is not appropriate because the amount of heat generation is large and the entire raw material carbon black powder to be treated is hardly uniformly reacted.

An ozone treatment time of more than 9 hours causes remarkable combustion of the raw material carbon black surface. Thus, roughening of the surface and branch narrowing in the steric structure (dendritic structure) of porous carbon black are caused along with such surface combustion, thereby leading to a decrease in mechanical strength of the steric structure (dendritic structure).

The ozone treatment of the raw material carbon black, which is in common with the oxygen treatment, is a strong exothermal reaction, and thus heat according to such a reaction needs to be not stored, but diffused to the outside. Any measure, therefore, is required in actual treatment. For example, it is effective to increase the flow speed of an ozone gas and thus let heat generated, out by such a gas, or lower the height of stacking of the raw material carbon black to be treated, for shortening of the diffusion path of heat.

### -Oxygen Treatment Step-

In the oxygen treatment step, the same effect as in the ozone treatment step is obtained by contacting oxygen with the raw material carbon black in a high temperature range. In other words, the oxygen treatment step plays the same role as that of the ozone treatment. The oxygen treatment step is performed, whereby porous carbon black satisfying the requirement (A) and the requirement (B) (preferably not only the requirement (A) and the requirement (B), but also at least one of the requirement (C) or the requirement (D)) is obtained.

In the oxygen treatment step, the amount of heat generation in oxidation by oxygen is large, and therefore ignition due to heat stored needs to be suppressed.

The oxygen concentration in the oxidation gas is more preferably higher, and is preferably at least 70% by volume or less, preferably 50% by volume or less.

The oxygen treatment temperature is also more preferably higher, but a too high treatment temperature leads to a decrease in energy of CO₂ production. Therefore, the oxygen treatment temperature is 500°C or less, preferably 450°C or less. In this regard, the oxygen treatment temperature is preferably 300°C or more, and a temperature less than 300°C leads to a low reaction speed, is not practical, and is not suited for the purpose of selective oxidation of the surface of the raw material carbon black.

The oxygen treatment time is not particularly restricted, and is preferably from 2 to 15 hours. In a case in which the oxygen treatment time is less than 2 hours, oxidation is insufficient, and a pore formed on the porous raw material carbon black after activation is not developed. In a case in which the oxygen treatment time is more than 15 hours, combustion of the raw material carbon black surface is more remarkable. Thus, roughening of the surface and branch narrowing in the steric structure (dendritic structure) of porous carbon black are caused along with surface combustion, thereby leading to a decrease in mechanical strength of the steric structure (dendritic structure).

Here, in a case in which the treatment temperature is from 450°C to 500°C, the oxygen treatment time is preferably from 2 to 9 hours.

For example, a rotary kiln, or a fluidized layer which allows the gas to be forcedly contacted with the raw material carbon black can be applied as an apparatus suited for the oxygen treatment step, from the viewpoint of making the oxidation treatment efficient. The rotary kiln and the fluidized layer allow a fresh oxidation gas and the raw material carbon black to be efficiently and uniformly contacted, and can realize the oxygen treatment in a short time.

Herein, the fluidized layer can complete the oxygen treatment in a short time because of a high percentage of gas utilization, but the amount of heat generation per unit time and unit volume is large, and thus it is important to design an apparatus allowing for easy removal of heat. For example, the amount of the raw material carbon black mounted in the height direction can be restricted by an increase in floor area, thereby allowing the oxidation gas itself to act as a heat removal medium of reaction heat.

### (Activation Treatment Step)

The activation treatment step is a step of making the oxidized raw material carbon obtained by oxidation in the oxidation treatment step, porous by activation.

The mechanism for activation of the raw material carbon black is considered as follows.

The raw material carbon black is contacted with an activation gas such as water vapor (H₂O) or CO₂ and kept at from 800°C to 1100°C, whereby a carbon atom constituting the raw material carbon black is removed in the form of CO. This reaction is made at an optimized reaction speed, whereby a peripheral portion (edge portion) of a fused polycyclic aromatic moiety, to be easily combusted, of a crystallite having a size of several nanometers forming the raw material carbon black is selectively oxidatively consumed. As a result, a gap occurs between such crystallites, and furthermore consumption of such crystallites is continued toward the inside. Thus, carbon black made porous is formed. This is a process of making carbon black porous by an activation operation.

An increased activation temperature increases the reaction speed, accelerates combustion of a surface vicinity in contact with a high-concentration activation gas, much further lowers the activation gas concentration for diffusion toward the inside, and decreases the rate of combustion of the inside. The reaction speed is moderately controlled in order to develop a pore in the inside without any change of the surface state. Water vapor and CO₂ are optimal activation gases from the viewpoint that the reaction speed can be controlled in a wide temperature range.

The reason why the application of activation by oxygen is not industrialized is as follows. The oxidation reaction of the raw material carbon black by water vapor and CO₂ is an endothermic reaction, the reaction does not progress as long as heat is not applied, and easily increases in scale from the viewpoint of being controllable by the amount of heat fed. On the contrary, the oxidation reaction of the raw material carbon black by oxygen is an exothermal reaction, and the reaction is hardly controlled because the temperature of a reaction site monotonically rises in a case in which heat generated is more than heat removed.

This phenomenon is accelerated by an increase in scale, and therefore oxidation by oxygen is not suited for large-scale production and activation with water vapor or CO₂ as the activation gas is suited therefor.

As long as a production process allowing the reaction of such activation to progress is realized, the activation apparatus is not restricted. It is preferable for efficient progress of such activation to increase the activation gas concentration on a surface of a raw material carbon black pellet. For such an increase, a decrease in thickness of a boundary film of an oxidizing gas, formed near the surface of a raw material carbon black pellet is preferable, and an increase in relative speed of the activation gas to the raw material carbon black pellet is effective. A rotary kiln or a fluidized layer generally used for industrial production is preferred because uniformity of the activation gas in a furnace can be enhanced. Such a fluidized layer is an excellent apparatus and is particularly suitable from the viewpoint of the percentage of gas utilization and the reaction speed because the relative speed of the activation gas with respect to the raw material carbon black pellet can be increased.

A specific condition of activation, the temperature, is controlled depending on the reaction strength of the activation gas. The activation gas is suitably water vapor or CO₂.

In a case in which water vapor is used for the activation gas, a preferred temperature is from 750°C to 900°C, and in a case in which CO₂ is used for the activation gas, a preferred temperature is from 800°C to 950°C.

In order to obtain porous carbon black satisfying the requirement (A) (BET surface area of from 800 to 1400 m²/g), the mass reduction rate of the porous raw material carbon black due to activation is, for example, from 60% by mass to 80% by mass. The treatment time taken until attainment of such a mass reduction rate is, for example, from 5 hours to 100 hours, and is preferably 10 to 80 hours, more preferably from 20 to 80 hours.

An activation condition in which the time taken until the mass reduction rate reaches 50% by mass is less than 5 hours leads to a difference in which the BET surface area is small, when compared with, for example, a case in which the time taken for the mass reduction rate is 20 hours. The reason for this difference in BET surface area is because a too high reaction speed leads to relatively large surface combustion of oxidized raw material carbon black against inside combustion for inside pore formation to cause consumption of one portion of the mass reduction for surface combustion, thereby not increasing the BET specific surface area, but causing a large asperity of 10 nm or more due to surface combustion (pore formed by development of a depressed portion of a binding portion of primary particles due to surface combustion). In other words, it is preferable for suppression of surface combustion that the activation temperature is lowered and the activation time is elongated.

On the other hand, long-time activation in which the time taken until the mass reduction rate reaches 50% by mass is more than 100 hours is not preferred because a too low activation speed leads to surface combustion dominant against inside combustion and suppress pore development.

It is also preferable to perform activation in the state of an increased pressure of the activation gas.

The activation gas concentration is high, whereby the rate of the oxidation reaction increases in substantial proportion to the concentration and the activation time can be shortened without any change in pore development, namely, without any change in BET surface area and also without any change in ratio of surface combustion. The activation time can be shortened in proportion to the pressure as long as the pressurization range is up to several atm.

The effect by a substantial increase in pressure is hardly exerted at a pressure of 6 atm or more, and a pressure of 6 atm or less is preferred. The activation time in the case of activation in a pressurized state is, for example, from 3 to 50 hours, preferably from 5 to 30 hours, more preferably from 5 to 20 hours. The lower limit and the upper limit of the activation time are determined in order to avoid the same phenomenon as that at ordinary pressure.

The above activation treatment step can provide porous carbon black in which a pore is formed inside of the raw material carbon black and which satisfies the requirement (A).

The porous raw material carbon black made porous is changed in tissue structure-crystal structure so as to have a more stable graphite structure in the course of an enhancement in crystallinity in the heat treatment step, and therefore a pore which can also be said to be a defect is changed so as to collapse. Accordingly, the pore structure of the porous raw material carbon black obtained in the activation treatment step needs to be made as a structure developed as compared with a finally desired pore structure so that a preferred pore structure is kept even after collapse of a pore in the heat treatment step. In other words, in order to satisfy the requirement (A) in the state of completion of the activation treatment step, the BET surface area of the porous raw material carbon black obtained in the activation treatment step is preferably 400 m²/g or more, more preferably 600 m²/g, still more preferably 800 m²/g or more at least corresponding to the lower limit in the requirement (A).

### (Heat Treatment Step)

The heat treatment step is a heat treatment step of heat-treating the porous raw material carbon black obtained in the activation treatment step.

A catalyst carrier is exposed to a noble potential of 1 V or more in a running environment of a fuel cell. An ionomer has a sulfonic acid group, and thus a catalyst carrier covered with the ionomer is placed at a noble potential of 1 V or more under a strongly acidic environment. In a case in which porous carbon black is applied to such an environment, thermodynamic stability cannot be desired and therefore a general measure is to increase the crystallinity as much as possible to avoid oxidative consumption in terms of rate.

An ordinary method for increasing the crystallinity of porous carbon black is heating treatment under an inert gas atmosphere or a reducing atmosphere. In the heat treatment step, for example, a heat treatment step (namely, graphitization treatment step) at from 1400°C to 1800°C for 10 minutes to 10 hours under an inert gas atmosphere at ordinary pressure (namely, 1 atm) is applied to the porous raw material carbon black obtained in the activation treatment step.

In the heat treatment step, the crystallinity of the porous raw material carbon black can be increased by graphitization of the porous raw material carbon black. More specifically, the porous raw material carbon black, to which activation is applied in the above intense activation condition and which has a BET specific surface area, is heat-treated in the above conditions, whereby not only a pore can be kept without collapsing, but also the crystallinity of the porous raw material carbon black can be increased. Thus, carbon black can be produced which satisfies not only the requirement (A) and the requirement (B), but also the requirement (D), and which is made porous.

The heat treatment step is not particularly restricted as long as it is a step capable of heating the porous raw material carbon black in the above conditions. Examples of the heating method include resistance heating, microwave heating, high-frequency heating, and a heating method with a furnace system. The furnace system is a graphitization furnace, a batch-type furnace, a tunnel furnace, or the like, and is not restricted as long as ordinary pressure and an inert gas atmosphere can be achieved.

The carbon material for a catalyst carrier of the disclosure is obtained through the above steps.

The activation treatment may again be performed in the carbon material for a catalyst carrier of the disclosure after the heat treatment step, in order to restore a pore collapsed by heat. It is important that the amount treated is kept small because such activation is accompanied by a decrease in intensity of a porous branch. Specifically, the mass reduction rate due to activation after heat treatment is preferably 15% by mass or less, more preferably 10% by mass or less, still more preferably 8% by mass or less.

### <Catalyst Layer for Solid Polymer Fuel cell and Solid Polymer Fuel Cell>

A solid polymer fuel cell is described together with the catalyst layer for a solid polymer fuel cell of the disclosure.

The carbon material of the disclosure can be applied to, for example, catalyst layers 150 and 160 provided in a solid polymer fuel cell 100 illustrated in FIG. 1. FIG. 1 is a schematic view illustrating one example of an outline configuration of the fuel cell of the disclosure.

The solid polymer fuel cell 100 illustrated in FIG. 1 includes separators 110 and 120, gas diffusion layers 130 and 140, catalyst layers 150 and 160, and an electrolyte membrane 170.

The separator 110 is a separator on the anode side, and introduces a reducing gas such as hydrogen to the gas diffusion layer 130. The separator 120 is a separator on the cathode side, and introduces an oxidizing gas such as an oxygen gas or air to a gas diffusion aggregation phase. The separators 110 and 120 are not particularly limited in terms of type as long as these are each a separator used for a conventional fuel cell (for example, a solid polymer fuel cell).

The gas diffusion layer 130 is a gas diffusion layer on the anode side, and diffuses the reducing gas supplied from the separator 110 and then supplies the reducing gas to the catalyst layer 150. The gas diffusion layer 140 is a gas diffusion layer on the cathode side, and diffuses the oxidizing gas supplied from the separator 120 and then supplies the oxidizing gas to the catalyst layer 160. The gas diffusion layers 130 and 140 are not particularly limited in terms of type as long as these are each a gas diffusion layer used for a conventional fuel cell (for example, a solid polymer fuel cell). Examples of the gas diffusion layers 130 and 140 include porous carbon materials (carbon cloth, carbon paper, and the like) and porous metal materials (metal mesh, metal wool, and the like). Preferred examples of the gas diffusion layers 130 and 140 include a gas diffusion layer of a two-layered structure. Specific examples include a gas diffusion layer of a two-layered structure in which a layer located on each of the separators 110 and 120 sides is a gas-diffusive fiber layer with a fibrous carbon material as a main component and a layer located on each of the catalyst layers 150 and 160 sides is a microporous layer with carbon black as a main component, in each of the gas diffusion layers 130 and 140.

The catalyst layer 150 is a so-called anode. An oxidation reaction of a reducing gas occurs to generate a proton and an electron in the catalyst layer 150. For example, in a case in which the reducing gas is a hydrogen gas, the following oxidation reaction occurs.

H₂→2H⁺ + 2e⁻ (E₀ = 0 V)

Protons generated by the oxidation reaction pass through the catalyst layer 150 and the electrolyte membrane 170, and reach the catalyst layer 160. Electrons generated by the oxidation reaction pass through the catalyst layer 150, the gas diffusion layer 130, and the separator 110, and reach an external circuit. The electrons work (generate electricity) in the external circuit, and then are introduced to the separator 120. Thereafter, the electrons pass through the separator 120 and the gas diffusion layer 140, and reach the catalyst layer 160.

The configuration of the catalyst layer 150 serving as the anode is not particularly restricted. The configuration of the catalyst layer 150 may be the same as that of a conventional anode, may be the same as that of the catalyst layer 160, or may be a configuration higher in affinity than that of the catalyst layer 160.

The catalyst layer 160 is a so-called cathode. A reduction reaction of an oxidizing gas occurs to generate water in the catalyst layer 160. For example, in a case in which the oxidizing gas is an oxygen gas or air, the following reduction reaction occurs. Water generated in the oxidation reaction is discharged to the outside of the solid polymer fuel cell 100, together with the unreacted oxidizing gas.

O₂ + 4H⁺ + 4e⁻→2H₂O (E₀ = 1.23 V)

Thus, the solid polymer fuel cell 100 generates electricity by use of the difference in energy (difference in potential) between the oxidation reaction and the reduction reaction. In other words, the electrons generated in the oxidation reaction work in the external circuit.

The catalyst layer 160 includes the carbon material for a catalyst carrier of the disclosure. In other words, the catalyst layer 160 includes the carbon material for a catalyst carrier of the disclosure, an electrolyte material (ionomer), and a catalyst component (platinum or the like). Thus, the catalyst layer 160 can be enhanced in electricity generation characteristics (in particular, high-load characteristics). The solid polymer fuel cell 100 can then be enhanced in electricity generation characteristics (in particular, high-load characteristics).

The catalyst carrying rate in the catalyst layer 160 is not particularly restricted, and is preferably from 30% by mass to less than 80% by mass. In a case in which the catalyst carrying rate is in this range, electricity generation characteristics (in particular, high-load characteristics) are further enhanced. The catalyst carrying rate is here represented by the percentage by mass of a catalyst component with respect to the total mass of a catalyst-carrying particle (particle in which the catalyst component is carried on the carbon material for a catalyst carrier). In a case in which the catalyst carrying rate is less than 30% by mass, a need for thickening the catalyst layer 160 can occur so that the solid polymer fuel cell 100 can withstand practical use. In this regard, in a case in which the catalyst carrying rate is 80% by mass or more, catalyst aggregation easily occurs. The catalyst layer 160, which is too thin, can give rise to the possibility of flooding.

The mass ratio I/C between the mass I of the electrolyte material and the mass C of the carbon material for a catalyst carrier in the catalyst layer 160 is not particularly restricted, and is preferably from more than 0.5 to less than 5.0. In this case, both a pore network and an electrolyte material network can be achieved, and electricity generation characteristics (in particular, high-load characteristics) are enhanced. In this regard, in a case where the mass ratio I/C is 0.5 or less, the electrolyte material network is weak, resulting in a tendency to enhance proton conduction resistance. In a case in which the mass ratio I/C is 5.0 or more, the pore network can be divided by the electrolyte material. In each case, electricity generation characteristics (in particular, high-load characteristics) can decrease.

The thickness of the catalyst layer 160 is not particularly restricted, and is preferably from more than 5 µm to less than 20 µm. In this case, the oxidizing gas easily diffuses, and flooding hardly occurs in the catalyst layer 160. In a case in which the thickness of the catalyst layer 160 is 5 µm or less, flooding easily occurs. In a case in which the thickness of the catalyst layer 160 is 20 µm or more, the oxidizing gas hardly diffuses in the catalyst layer 160, and the catalyst component near the electrolyte membrane 170 hardly moves. In other words, the rate of catalyst utilization can decrease.

The electrolyte membrane 170 is constituted from an electrolyte material having proton conductivity. The electrolyte membrane 170 allows protons generated in the oxidation reaction to be introduced to the catalyst layer 160 (cathode). The electrolyte material is not particularly limited in terms of type as long as it is an electrolyte material used for conventional fuel batteries, for example, solid polymer fuel batteries. Suitable examples of the electrolyte material include an electrolytic resin. Examples of the electrolytic resin include a polymer into which a phosphoric acid group, a sulfonic acid group, or the like is introduced. Specific examples include a perfluorosulfonic acid polymer, and a polymer into which benzenesulfonic acid or the like is introduced. Of course, the electrolyte material may also be any other electrolyte material. Examples of such an electrolyte material include inorganic and inorganic-organic hybrid electrolyte materials. The solid polymer fuel cell 100 may also be a fuel cell to be operated in a range of from ordinary temperature (25°C) to 150°C.

### <Method of Producing Solid Polymer Fuel Cell>

The method of producing the solid polymer fuel cell 100 is not particularly restricted as long as it is the same production method as a conventional one. However, the carbon material for a catalyst carrier of the disclosure is used for the catalyst carrier. The carbon material for a catalyst carrier of the disclosure is preferably used for the catalyst carrier at least in the catalyst layer 160 serving as a cathode, of the catalyst layers 150 and 160. Of course, the carbon material for a catalyst carrier of the disclosure may also be used in each of both the catalyst layers including the catalyst layer 150 serving as an anode and the catalyst layer 160 serving as a cathode.

### Examples

Examples of the carbon material for a catalyst carrier of the disclosure are described. First, the method of measuring each parameter is described.

### <Method of Measuring each Parameter>

### (Measurement of Nitrogen Adsorption/Desorption Isotherm (BET Specific Surface Area))

About 30 mg of a specimen was weighed and taken, and dried in vacuum at 120°C for 2 hours. Next, the specimen was set on an automatic specific surface area measurement apparatus (BELSORP MAX manufactured by MicrotracBEL Corp.), and a nitrogen gas was used as an adsorbate to measure a nitrogen adsorption/desorption isotherm at a measurement temperature of the liquid nitrogen temperature (about 77K).

The BET specific surface area was calculated by BET analysis in a range of relative pressure P/P₀ of from 0.05 to 0.15 in the nitrogen adsorption isotherm. The BET value was calculated with calculation software attached to the apparatus.

### (Measurement of ΔV_{fin} and ΔVᵢₙᵢ by Mercury Porosimetry Method)

A specimen was measured off in an amount of from 0.3 to 1.0 g and lightly consolidated and molded into a clumpy form, thereby preparing a specimen for measurement.

The specimen for measurement was packed in a sample container of a measurement apparatus (AutoPore IV9520 manufactured by Shimadzu Corporation), and mercury indentation was made in conditions of an introduction initial pressure of 5 kPa and a maximum indentation pressure of 400 MPa. The amount (mL/g) of mercury absorption was here measured at each of pressure values of mercury indentation of 10 MPa and 100 MPa. The delta between these measured values was defined as "difference ΔVᵢₙᵢ (mL/g) between the amount (mL/g) of mercury absorption at a mercury intrusion pressure of 10 MPa before pressurization of the porous activated carbon black at a pressure of 100 MPa with a mold and the amount (mL/g) of mercury absorption at a mercury intrusion pressure of 100 MPa".

In this regard, the specimen was charged in a cylindrical mold having a diameter of 10 mm so that the height was about 5 mm, and retained for 1 minute under pressurization at 100 MPa, this pressure was released to take out the specimen from the mold, and the specimen was pulverized with a mortar. The specimen pulverized was again charged in the mold in the same manner as described above, and pressed at 100 MPa for 1 minute, thereby obtaining a specimen for measurement.

The amount (mL/g) of mercury absorption was measured at each of pressure values of mercury indentation of 10 MPa and 100 MPa in the same manner as described above except that the resulting specimen for measurement was used. The delta between these measured values was defined as "difference ΔV_{fin} (mL/g) between the amount (mL/g) of mercury absorption at a mercury intrusion pressure of 10 MPa after pressurization of the porous activated carbon black at a pressure of 100 MPa with a mold and the amount (mL/g) of mercury absorption at a mercury intrusion pressure of 100 MPa".

### (Measurement of Intensity Ratio I_{D}/I_{G} by Raman Spectrometric Method)

About 3 mg of the specimen was weighed and taken, and a Raman spectroscopic spectrum was measured with a laser Raman spectrometer (NRS-3100 Model manufactured by JASCO Corporation). A peak in a range of from 1300 to 1360 cm⁻¹, called D band, and a peak in a range of from 1560 to 1620 cm⁻¹, called G band, were extracted from the Raman spectroscopic spectrum obtained in following measurement conditions, the intensities (the areas of the peaks) of these two peaks were analyzed with spectrum analysis software attached to the apparatus, and the intensity I_{D} of the D band and the intensity I_{G} of the G band were calculated. The intensity ratio I_{D}/I_{G} was calculated from these values.

### -Measurement Conditions-

Excitation laser: 532 nm, laser power: 10 mW (irradiation power of specimen: 1.1 mW), microscope location: Backscattering, objective lens: magnification of ×100, spot diameter: 1 µm, exposure time: 30 sec, observation wavenumber: from 2000 cm⁻¹ to 300 cm⁻¹, cumulated number: 6.

### <Experiment Examples>

### (Raw Material Carbon Black)

The raw material carbon black prepared here was NITERON #200 or NITERON #SH manufactured by NIPPON STEEL Carbon Co., Ltd., or TOKABLACK #4500, GFY manufactured by Tokai Carbon Co., Ltd., and such each raw material carbon black was subjected to oxidation treatment, an activation treatment step, and a heat treatment step described later.

In this regard, the raw material carbon black prepared here was Ketjen black EC300J or EC600JD manufactured by Lion Corporation. Such raw material carbon black was made porous, and thus was subjected to only a heat treatment step described later.

Table 1 below shows the values of the primary particle size (arithmetic average particle size), the amount of DBP oil absorption, and the BET specific surface area of raw material carbon black, each cited from the website of products of Ketjen black, put on Carbon Black Yearbook No.72 (2022) edited by CARBON BLACK ASSOCIATION.

### [Table 1]

**Table 1**

| Trade name | #200 | #4500 | #SH | GFY | EC300J | EC600JD |
|---|---|---|---|---|---|---|
| Primary particle size (nm) | 29 | 40 | 61 | 72 | 39.5 | 34.0 |
| Amount of DBP oil absorption (mL/100 g) | 101 | 168 | 140 | 152 | 360 (15-g method) | 495 (9-g method) |
| BET specific surface area (m²/g) | 75 | 58 | 25 | 32 | 800 | 1270 |

### (Oxidation Treatment Step)

Any of an ozone treatment step (example of the column designated as "O₃" in the Table) or an oxygen treatment step (example of the column designated as "O₂" in the Table) according to Table 2 was carried out as the oxidation treatment.

### -Ozone Treatment Step-

Pure oxygen was used as an input gas in an ozone generator for research use, manufactured by Kotohira Kogyo Co., Ltd. The principle of ozone gas production in the apparatus is a so-called discharge system, and the ozone concentration is adjusted by the voltage and the amount of current between electrodes, and the flow speed of a gas allowed to flow. In other words, a mixed gas of ozone and oxygen serves as an output gas from the generator. The electrode voltage was set at a variable flow rate of an oxygen gas input, with a fixed apparatus, and the flow rate was set to 2 L/min. The raw material carbon black is more easily oxidized by ozone at a larger surface area, and is more hardly oxidized at a higher crystallinity by heat treatment. Ozone oxidation of the raw material carbon black is an exothermal reaction and thus, in a case in which the amount of the reaction is large, heat is accumulated to cause a local rise of the temperature and ignition. Therefore, in experiments, ozone was diluted by mixing the output gas from the ozone generator with an argon gas to such an extent that ignition of carbon did not occur by reaction heat, and was adopted as an oxidation gas. The amount of gas sent to a reaction tube was controlled. The amount of reaction of ozone treatment was adjusted by the contact time with the output gas, or by heating the reaction tube set in an electric furnace.

In a specific reaction apparatus, a vertical quartz reaction tube having an outer diameter of 35 mmφ was adopted, and a filter obtained by fusion of quartz beads was fused as a dispersing plate in the tube. The dispersing plate was, if necessary, lined with quartz wool small in fiber diameter, the raw material carbon black was put thereon, and the oxidation gas was allowed to flow from bottom up, thereby allowing the flow speed to increase to such an extent that no powder was scattered outside the system, and to be adjusted to the flow speed shown in Table 2 so that unevenness of the reaction was reduced. The amount of the reaction was determined by the change in mass. The increase in mass due to an oxygen functional group imparted increased up to 0.5% at the beginning of the reaction, and thereafter transfer to mass reduction occurred. The pore structure after the ozone oxidation was examined with a nitrogen gas adsorption isotherm. As a result, such isotherms before treatment and after treatment were generally overlapped, namely, it was confirmed that the surface was burned down and the pore size distribution with combustion or the like of the pore inside did not change by the ozone oxidation.

Table 2 described the treatment temperature (controlled with the temperature of the electric furnace) as a control factor and the treatment time of the ozone treatment step.

### -Oxygen Treatment Step-

The reaction tube used here was a tube in which a quartz filter (a pore size of from 40 to 50 µm) was fused as a dispersing plate in a quartz tube having an outer diameter of 50 mmφ. Quartz wool was charged at a height of about 1 cm in the reaction tube, and the raw material carbon black in a granulated state was placed thereon. The amount of loading was set to from about 20 to 25 g, and dry air, or a gas in which an argon gas was mixed with dry air was allowed to flow from the lower portion toward the upper portion of the reaction tube as the oxidation gas at a flow speed shown in Table 2.

The oxygen treatment temperature was carefully selected so that ignition did not occur due to heat storage by the exothermal reaction.

Since the combustion speed differs depending on the type of the raw material carbon black, it is important to carefully select conditions with respect to each carbon black.

Table 2 described the treatment temperature (controlled with the temperature of the electric furnace) as a control factor and the treatment time of the oxygen treatment step.

### (Activation Treatment Step)

The reaction tube used here was a tube in which a quartz filter was fused as a dispersing plate in a quartz tube having an outer diameter of 35 mmφ, quartz wool was placed at a height of about 1 cm on the dispersing plate, from 5 g to 15 g of oxidized raw material carbon black was placed thereon, and the reaction tube was set in a vertical electric furnace to be ordinally used at 1100°C.

An argon gas was allowed to flow from bottom to top of the reaction tube before heating, thereby purging the inside of the reaction tube with the argon gas, then a temperature rise at 10°C/min was started to perform heating from 850 to 950°C, thereby allowing the temperature to reach a predetermined temperature, and then switching to a CO₂ gas was made. The flow rate was adjusted so that the linear speed was from 1 to 2 cm/sec in the state of the temperature in the furnace. After treatment for a predetermined time, the reaction tube was taken out from the furnace, and switching to an argon gas was simultaneously made to perform natural cooling. After cooling to approximately room temperature was confirmed, porous raw material carbon black was taken out and the mass thereof was measured, thereby calculating the mass reduction rate of the yield with respect to the mass loaded (Mass loaded/Mass recovered). The activation temperature and the activation time as activation treatment conditions were adjusted as shown in Table 2 so that the mass reduction rate was in a range of from 55 to 80% by mass.

### (Heat Treatment Step)

The heating furnace used here was a so-called graphitization furnace with a graphite material as a heating element. The porous raw material carbon black obtained in the activation treatment step was placed in a crucible having a volume of about 100 cc, subjected to purging with an argon gas by decompression and vacuum, then heated at 10°C/min with argon at a flow speed enabling the volume in the furnace to be purged in several ten minutes, retained at a predetermined temperature for a certain time and then naturally cooled to approximately room temperature, and then taken out. The retention time at the heat treatment temperature was variable, and such conditions were shown in Table 2.

The carbon material for a catalyst carrier (porous activated carbon black) of each example was obtained through the above steps.

### <Production of Membrane Electrode Assembly (MEA)>

### (Production of Catalyst)

The carbon material for a catalyst carrier (porous activated carbon black) of each Example was added to an ethanol/water mixed solvent, treated with an ultrasonic homogenizer for 2 minutes, and thus dispersed in the solvent. A predetermined amount of a nitric acid solution of a dinitrodiammine platinum complex was added thereto, thereby adjusting the platinum carrying rate to 40% by mass, kept at a temperature lower by several degrees than the boiling point, and stirred in an oil bath for 15 hours.

After such treatment, the resultant was filtered, dispersed again in distilled water, refiltered, and treated by drying in a vacuum at 90°C for 5 hours, thereby providing a catalyst.

### (Production of Ink)

An ionomer solution manufactured by FUJIFILM Wako Pure Chemical Corporation was diluted with ethanol to adjust the solid content concentration to 10% by mass, then dropped into an ethanol solution in which the catalyst was dispersed in advance, furthermore dispersed with an ultrasonic homogenizer, and stirred with 1-mmφ glass beads for from 10 to 15 hours. Thus, ink for catalyst layer formation was obtained.

### <Production of MEA>

The ink was uniformly applied onto a Teflon ((registered trademark)) sheet with an atomizer, and dried with an air flow dryer at 60°C, to prepare a decal in which a catalyst layer was formed. An electrode having a predetermined size of 36 mm was cut out from the decal. Such two sheets cut out, which were the same, were respectively adopted as a positive electrode and a negative electrode, the positive electrode and the negative electrode were allowed to face both respective surfaces of a Nafion membrane, and thermally fused. Thus, MEA was obtained.

### <Cell Evaluation>

### (Evaluation of Electricity Generation Characteristics (High-Load Characteristics))

The MEA produced with the carbon material for a catalyst carrier (porous activated carbon black) of each Example was incorporated into a cell, and set in a fuel cell measurement apparatus, and performance evaluation of the fuel cell was performed by the following procedure.

The reaction gases, air and pure hydrogen, were fed respectively to the cathode and the anode at a back pressure of 0.04 MPa adjusted with a back pressure valve provided downstream of the cell so that the respective rates of utilization were 25% and 70%. The cell temperature was set to 80°C, the respective reaction gases to be fed to the cathode and the anode were bubbled in distilled water warmed at 80°C in a humidifier, thus the gases humidified at 80°C were fed to the cell at 80°C, and electricity generation evaluation was performed.

The load was gradually increased under a condition in which the reaction gases were fed to the cell under such a setting, and the output current density of the cell after retention at an output voltage of 0.3 V for 1 hour was measured, and evaluated according to the following pass rank and fail rank criteria. The results are shown in Table 2.

### [Pass Rank]

A: One in which the current density after retention at an output voltage of 0.3 V for 1 hour is 1200 mA/cm² or more.
B: One in which the current density after retention at an output voltage of 0.3 V for 1 hour is 1100 mA/cm² or more.

### [Fail Rank]

C: One in which the current density after retention at an output voltage of 0.3 V for 1 hour is less than 1100 mA/cm².

Table 2 shows the details of Experimental Examples.

In Table 2, "Gas type/Gas type: mL/min /mL/min" means respective flow speeds of two types of gases.

### [Table 2]

**Table 2-1**

| | Raw material carbon black | | Oxidation treatment step | | | Activation treatment step | | | Heat treatment step | |
|---|---|---|---|---|---|---|---|---|---|---|
| | Type | Primary particle size | Gas type/Gas type: mL/min /mL/min | Treatment temperature | Treatment time | Gas type | Treatment temperature | Mass reduction rate | Treatment temperature | Treatment time |
| | | nm | | °C | hour | H₂O/CO₂ | °C | % | °C | hour |
| GFY-1 | GFY | 72 | - | - | - | CO2 | 850 | 67.2 | 1600 | 1 |
| GFY-2 | | | - | - | - | | 850 | 71.2 | 1600 | 1 |
| GFY-3 | | | - | - | - | | 850 | 75.6 | 1600 | 1 |
| GFY-4 | | | O3/Ar:1000/0 | 25 | 6 | CO2 | 850 | 70.3 | 1600 | 1 |
| GFY-5 | | | O3/Ar:1000/0 | 25 | 6 | CO2 | 850 | 74.6 | 1600 | 1 |
| GFY-6 | | | O3/Ar:1000/0 | 25 | 4 | CO2 | 850 | 74.3 | 1600 | 1 |
| GFY-7 | | | O3/Ar:1000/0 | 25 | 8 | CO2 | 850 | 74.8 | 1600 | 1 |
| GFY-8 | | | O3/Ar:1000/0 | 25 | 10 | CO2 | 850 | 74.5 | 1600 | 1 |
| GFY-9 | GFY | 72 | O3/Ar:800/200 | 50 | 4 | CO2 | 850 | 73.5 | 1600 | 2 |
| GFY-10 | | | O3/Ar:600/400 | 50 | 4 | CO2 | 850 | 73.6 | 1600 | 2 |
| GFY-11 | | | O3/Ar:400/600 | 50 | 4 | CO2 | 850 | 74 | 1600 | 2 |
| GFY-12 | | | O3/Ar:200/800 | 50 | 4 | CO2 | 850 | 73.8 | 1600 | 2 |
| GFY-13 | | | O3/Ar:200/800 | 70 | 4 | CO2 | 850 | 74.1 | 1600 | 2 |
| GFY-14 | | | O3/Ar:200/800 | 90 | 4 | CO2 | 850 | 74.2 | 1600 | 2 |
| GFY-15 | GFY | 72 | O3/Ar:800/400 | 40 | 5 | CO2 | 880 | 77.6 | 1700 | 1 |
| GFY-16 | | | O3/Ar:800/400 | 40 | 5 | CO2 | 880 | 78.1 | 1700 | 2 |
| GFY-17 | | | O3/Ar:800/400 | 40 | 5 | CO2 | 880 | 77.9 | 1700 | 4 |
| GFY-18 | | | O3/Ar:800/400 | 40 | 5 | CO2 | 880 | 77.8 | 1700 | 8 |
| GFY-19 | | | O3/Ar:800/400 | 40 | 5 | CO2 | 880 | 77.5 | 1700 | 12 |
| GFY-20 | GFY | 72 | O3/Ar:800/400 | 50 | 4 | CO2 | 850 | 58.3 | 1600 | 1.5 |
| GFY-21 | | | O3/Ar:800/400 | 50 | 4 | CO2 | 850 | 64.3 | 1600 | 1.5 |
| GFY-22 | | | O3/Ar:800/400 | 50 | 4 | CO2 | 850 | 68.9 | 1600 | 1.5 |
| GFY-23 | | | O3/Ar:800/400 | 50 | 4 | CO2 | 850 | 78.3 | 1600 | 1.5 |
| GFY-24 | | | O3/Ar:800/400 | 50 | 4 | CO2 | 850 | 81.9 | 1600 | 1.5 |
| GFY-25 | GFY | 72 | O3/Ar:800/400 | 50 | 4 | CO2 | 850 | 76.5 | 1300 | 2 |
| GFY-21 | | | O3/Ar:800/400 | 50 | 4 | CO2 | 850 | 76.5 | 1400 | 2 |
| GFY-22 | | | O3/Ar:800/400 | 50 | 4 | CO2 | 850 | 76.5 | 1500 | 2 |
| GFY-23 | | | O3/Ar:800/400 | 50 | 4 | CO2 | 850 | 76.5 | 1800 | 2 |
| GFY-24 | | | O3/Ar:800/400 | 50 | 4 | CO2 | 850 | 76.5 | 2000 | 2 |

### [Table 3]

**Table 2-2**

| | Raw material carbon black | | Oxidation treatment step | | | Activation treatment step | | | Heat treatment step | |
|---|---|---|---|---|---|---|---|---|---|---|
| | Type | Primary particle size | Gas type/Gas type: mL/min /mL/min | Treatment temperature | Treatment time | Gas type | Treatment temperature | Mass reduction rate | Treatment temperature | Treatment time |
| | | nm | | °C | hour | H₂O/CO 2 | °C | % | °C | hour |
| GFY-25 | GFY | 72 | O2/Ar:500/500 | 350 | 15 | CO2 | 850 | 75.1 | 1600 | 2 |
| GFY-26 | | | O2/Ar:500/500 | 400 | 10 | CO2 | 850 | 74.8 | 1600 | 2 |
| GFY-27 | | | O2/Ar:500/500 | 450 | 5 | CO2 | 850 | 75.3 | 1600 | 2 |
| GFY-28 | | | O2/Ar:500/500 | 500 | 2 | CO2 | 850 | 75.2 | 1600 | 2 |
| GFY-29 | GFY | 72 | O2/Ar:500/500 | 450 | 1 | CO2 | 870 | 76.3 | 1600 | 2.5 |
| GFY-30 | | | O2/Ar:500/500 | 450 | 4 | CO2 | 870 | 75.4 | 1600 | 2.5 |
| GFY-31 | | | O2/Ar:500/500 | 450 | 7 | CO2 | 870 | 75.9 | 1600 | 2.5 |
| GFY-32 | | | O2/Ar:500/500 | 450 | 10 | CO2 | 870 | 76.6 | 1600 | 2.5 |
| GFY-33 | GFY | 72 | O3/Ar:800/400 | 50 | 4 | H₂O | 800 | 71.3 | 1600 | 2 |
| GFY-34 | | | O3/Ar:800/400 | 50 | 4 | H₂O | 850 | 77.5 | 1600 | 2 |
| 4500-1 | #4500 | 40 | O3/Ar:800/400 | 50 | 4 | CO2 | 850 | 71.6 | 1700 | 2.5 |
| 4500-2 | | | O3/Ar:800/400 | 50 | 4 | CO2 | 850 | 76.1 | 1800 | 2 |
| SH-1 | #SH | 61 | O3/Ar:800/400 | 50 | 4 | CO2 | 850 | 72.3 | 1600 | 2 |
| SH-2 | | | O3/Ar:800/400 | 50 | 4 | CO2 | 850 | 77.6 | 1600 | 2 |
| 200-1 | #200 | 29 | O3/Ar:800/400 | 50 | 4 | CO2 | 850 | 70.2 | 1700 | 1.5 |
| 200-2 | | | O3/Ar:800/400 | 50 | 4 | CO2 | 850 | 75.3 | 1800 | 2 |
| EC-1 | EC600J D | 39.5 | | | | | | | 1600 | 1.5 |
| EC-1 | EC300J | 34.0 | | | | | | | 1600 | 1.5 |

### [Table 4]

**Table 2-3**

| | Characteristics | | | | Electricity generation characteristics | Note |
|---|---|---|---|---|---|---|
| | BET specific surface area | ΔVfin/ΔVini | Δvini | I_{D}/I_{G} | High-load characteristics | |
| | m²/g | | mL/g | | mA/cm² | |
| GFY-1 | 515 | 0.71 | 0.77 | 1.95 | c | Comparative Example |
| GFY-2 | 605 | 0.72 | 0.8 | 1.95 | C | Comparative Example |
| GFY-3 | 695 | 0.71 | 0.83 | 2 | C | Comparative Example |
| GFY-4 | 675 | 0.78 | 0.89 | 1.95 | B | Example |
| GFY-5 | 725 | 0.80 | 0.92 | 1.95 | B | Example |
| GFY-6 | 705 | 0.84 | 0.89 | 1.9 | B | Example |
| GFY-7 | 655 | 0.77 | 0.8 | 2.1 | B | Example |
| GFY-8 | 395 | 0.74 | 0.8 | 2.3 | c | Comparative Example |
| GFY-9 | 715 | 0.84 | 0.86 | 1.95 | B | Example |
| GFY-10 | 725 | 0.85 | 0.85 | 1.95 | B | Example |
| GFY-11 | 730 | 0.86 | 0.83 | 1.95 | B | Example |
| GFY-12 | 715 | 0.85 | 0.82 | 1.9 | B | Example |
| GFY-13 | 725 | 0.85 | 0.81 | 1.85 | B | Example |
| GFY-14 | 555 | 0.71 | 0.79 | 1.85 | C | Comparative Example |
| GFY-15 | 810 | 0.91 | 0.88 | 1.89 | B | Example |
| GFY-16 | 765 | 0.86 | 0.84 | 1.81 | B | Example |
| GFY-17 | 655 | 0.82 | 0.82 | 1.71 | B | Example |
| GFY-18 | 465 | 0.77 | 0.81 | 1.56 | B | Example |
| GFY-19 | 390 | 0.74 | 0.78 | 1.39 | C | Comparative Example |
| GFY-20 | 390 | 0.93 | 0.78 | 1.95 | C | Comparative Example |
| GFY-21 | 495 | 0.91 | 0.81 | 1.9 | B | Example |
| GFY-22 | 585 | 0.87 | 0.82 | 1.85 | A | Example |
| GFY-23 | 805 | 0.81 | 0.89 | 1.9 | B | Example |
| GFY-24 | 930 | 0.74 | 1.02 | 1.9 | C | Comparative Example |
| GFY-25 | 895 | 0.74 | 0.84 | 2.25 | C | Comparative Example |
| GFY-21 | 805 | 0.79 | 0.85 | 2.15 | B | Example |
| GFY-22 | 755 | 0.82 | 0.85 | 2.05 | A | Example |
| GFY-23 | 425 | 0.83 | 0.86 | 1.65 | A | Example |
| GFY-24 | 255 | 0.81 | 0.81 | 1.21 | C | Comparative Example |

### [Table 5]

**Table 2-4**

| | Characteristics | | | | Electricity generation characteristics | Note |
|---|---|---|---|---|---|---|
| | BET specific surface area | ΔVfin/ΔVini | Δvini | I_{D}/I_{G} | High-load characteristics | |
| | m²/g | | mL/g | | mA/cm² | |
| GFY-25 | 855 | 0.85 | 0.85 | 1.95 | B | Example |
| GFY-26 | 845 | 0.84 | 0.86 | 1.9 | A | Example |
| GFY-27 | 850 | 0.86 | 0.86 | 1.95 | A | Example |
| GFY-28 | 865 | 0.83 | 0.84 | 1.95 | B | Example |
| GFY-29 | 725 | 0.74 | 0.82 | 1.85 | C | Comparative Example |
| GFY-30 | 805 | 0.79 | 0.83 | 1.9 | A | Example |
| GFY-31 | 875 | 0.81 | 0.84 | 1.95 | B | Example |
| GFY-32 | 895 | 0.73 | 0.82 | 2.05 | C | Comparative Example |
| GFY-33 | 825 | 0.83 | 0.81 | 1.9 | B | Example |
| GFY-34 | 885 | 0.82 | 0.83 | 1.95 | B | Example |
| 4500-1 | 1025 | 0.78 | 1.25 | 1.85 | B | Example |
| 4500-2 | 985 | 0.8 | 1.21 | 1.75 | A | Example |
| SH-1 | 875 | 0.82 | 0.95 | 1.85 | A | Example |
| SH-2 | 935 | 0.83 | 0.94 | 1.8 | B | Example |
| 200-1 | 1185 | 0.76 | 1.26 | 1.95 | B | Example |
| 200-2 | 1050 | 0.78 | 1.29 | 1.85 | B | Example |
| EC-1 | 455 | 0.69 | 1.1 | 1.96 | C | Comparative Example |
| EC-1 | 325 | 0.74 | 0.85 | 2.15 | C | Comparative Example |

As clear from the above results, the carbon material for a catalyst carrier (porous activated carbon black), corresponding to each of the present Examples, is excellent in electricity generation characteristics (in particular, high-load characteristics) as compared with the carbon material for a catalyst carrier, corresponding to each of Comparative Examples.

As clear from Reference Examples, sufficient electricity generation characteristics (in particular, high-load characteristics) are not obtained with Ketjen black EC300J or EC600JD manufactured by Lion Corporation.

In general, application of raw material carbon black large in particle size is not generally suited for activation, does not allow for development of a pore, and does not provide a large BET surface area, but it can be seen that application of the production method of the disclosure can provide a carbon material for a catalyst carrier (porous activated carbon black), satisfying excellent electricity generation characteristics (in particular, high-load characteristics), regardless of the particle size of the raw material carbon black, as long as prescriptions of physical properties in the disclosure are satisfied. In other words, all of Examples in which raw material carbon black having a primary particle size of from 29 nm to 72 nm was applied exhibited excellent electricity generation characteristics (in particular, high-load characteristics). As clear from these, application of raw material carbon black having a primary particle size of from 20 nm to 80 nm can provide a carbon material for a catalyst carrier (porous activated carbon black), having excellent electricity generation characteristics (in particular, high-load characteristics).

The description of reference signs is as follows.
- 100: solid polymer fuel cell
- 110, 120: separator
- 130, 140: gas diffusion layer
- 150, 160: catalyst layer
- 170: electrolyte membrane

The disclosure of Japanese Patent Application No. 2023-108953 is herein incorporated by reference in its entirety.

All documents, patent applications, and technical standards described herein are herein incorporated by reference, as if each individual document, patent application, and technical standard were specifically and individually indicated to be incorporated by reference.

## Claims

1. A carbon material for a catalyst carrier of a solid polymer fuel cell, the carbon material comprising porous activated carbon black satisfying the following requirements (A) and (B):
(A) a BET specific surface area S_{BET} determined by BET analysis of a nitrogen gas adsorption isotherm is from 400 to 1200 m²/g, and
(B) a ratio ΔV_{fin}/ΔVᵢₙᵢ is from 0.75 to 0.95 in a case in which a difference between an amount (mL/g) of mercury absorption at a mercury intrusion pressure of 10 MPa and an amount (mL/g) of mercury absorption at a mercury intrusion pressure of 100 MPa after pressurization of the porous activated carbon black at a pressure of 100 MPa with a mold in a mercury porosimetry method, and such a difference before pressurization of the porous activated carbon black at a pressure of 100 MPa with the mold, are respectively defined as ΔV_{fin} and ΔVᵢₙᵢ.

2. The carbon material for a catalyst carrier of a solid polymer fuel cell according to claim 1, wherein at least one of the following requirements (C) or (D) is further satisfied:
(C) the ΔVᵢₙᵢ is from 0.80 mL to 1.50 mL/g, and
(D) an intensity ratio I_{D}/I_{G} is from 1.40 to 2.20 in a case in which an intensity in a D band of from 1300 to 1360 cm⁻¹ is designated as I_{D} and an intensity in a G band of from 1560 to 1620 cm⁻¹ is designated as I_{G} in a Raman spectrum obtained by Raman spectrometry.

3. A catalyst layer for a solid polymer fuel cell, the catalyst layer comprising the carbon material for a catalyst carrier of a solid polymer fuel cell according to claim 1 or claim 2.

4. A fuel cell comprising the catalyst layer for a solid polymer fuel cell according to claim 3.

5. The fuel cell according to claim 4, wherein the catalyst layer for a solid polymer fuel cell is a catalyst layer on a cathode side.
